# EUROPÄISCHE PATENTSCHRIFT

(11) **EP 2 585 291 B1**
(45) Veröffentlichungstag und Bekanntmachung des Hinweises auf die Patenterteilung: **14.09.2016**
(21) Anmeldenummer: 11725940.8
(22) Anmeldetag: 20.06.2011
(51) Int. Cl.: B32B 17/10, H05B 3/84, H01R 4/48, H01R 13/24, H01R 13/504

(54) **LAMINIERTE GLASSCHEIBE MIT ELEKTRISCHER FUNKTION UND ANSCHLUSSELEMENT**
LAMINATED GLAZING WITH ELECTRIC FUNCTIONALITY AND ELECTRICAL CONNECTION ELEMENT
VITRAGE FEUILLETÉ AYANT UNE FONCTION ÉLECTRIQUE ET ÉLÉMENT DE RACCORDEMENT ÉLECTRIQUE

(30) Priorität: 22.06.2010 EP 10401085
(43) Veröffentlichungstag der Anmeldung: 01.05.2013
(73) Patentinhaber: Saint-Gobain Glass France, 92400 Courbevoie (FR)
(72) Erfinder: SCHLARB, Andreas, 52134 Herzogenrath (DE); SCHREIBER, Walter, 52074 Aachen (DE); REUL, Bernhard, 52134 Herzogenrath (DE)
(74) Vertreter: Lendvai, Tomas
(86) Internationale Anmeldenummer: PCT/EP2011/060191
(87) Internationale Veröffentlichungsnummer: WO 2011/161039

(56) Entgegenhaltungen:
- DE-A1- 4 235 063
- DE-A1- 10 360 255
- DE-A1- 19 533 761
- GB-A- 1 033 322
- US-A- 2 648 754

## Beschreibung

Die Erfindung betrifft eine laminierte Glasscheibe mit elektrischer Funktion, insbesondere einer Heizfunktion und einem Anschlusselement zur elektrischen Kontaktierung. Die Erfindung betrifft außerdem ein Verfahren zur Herstellung einer derartigen laminierten Glasscheibe sowie deren Verwendung.

Laminierte Glasscheiben, auch Verbundglasscheiben genannt, bestehen aus zwei oder mehreren Scheiben Floatglas oder Einscheiben-Sicherheitsglas und werden mit einer oder mehreren Zwischenschichten bei Hitze und Druck fest miteinander verbunden. Die Zwischenschichten bestehen meist aus thermoplastischen Kunststoffen, wie Polyvinylbutyral (PVB) oder Ethylenvinylacetat (EVA).

Durch Einbringen eines elektrisch funktionellen Bauelements oder einer elektrisch funktionellen Schicht zwischen die Glasscheiben, kann die laminierte Glasscheibe mit unterschiedlichen Funktionen versehen werden. Die elektrisch funktionellen Bauelemente sind beispielsweise Antennenelemente, Solarzellen oder elektrochrome Beschichtungen. Durch Einlegen dünner Metalldrähte oder Aufbringen einer elektrisch beheizbaren Beschichtung kann insbesondere eine Heizfunktion erreicht werden.

Zur Kontaktierung elektrisch funktioneller Schichten in laminierten Glasscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschreiben.

Flexible Folienleiter, mitunter auch Flachleiter oder Flachbandleiter genannt, bestehen üblicherweise aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicke Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch funktionellen Schichten in laminierten Glasscheiben eignen, weisen lediglich eine Gesamtdicke von 0,3 mm auf. Derart dünne Folienleiter können ohne Schwierigkeiten zwischen den Einzelglasscheiben in der thermoplastischen Klebeschicht eingebettet werden.

Der Einsatz von Folienleitern zur Kontaktierung von elektrisch funktionellen Schichten ist nicht nur auf den Fahrzeugbereich beschränkt. Wie aus DE 199 60 450 C1 und DE 102 08 552 A1 bekannt ist, werden Folienleiter auch im Baubereich verwendet. In Verbund- oder Isolierglasscheiben dienen Folienleiter zur elektrischen Kontaktierung von integrierten elektrischen Bauelementen, wie spannungsgesteuerte elektrochrome Schichten, Solarzellen, Heizdrähte, Heizschichten oder Alarmschleifen.

In der Regel wird vom Scheibenhersteller eine Scheibe mit einem kompletten Anschlusselement und einem Stecker zum werkzeuglosen Anschluss an eine weitere Steuerungselektrik gefordert. Die Verbindung zwischen dem Folienleiter und einer weiteren Elektrik erfolgt in der Regel durch Weichlöten und wird durch ein Gehäuse geschützt.

Aufgrund der geringen Dicken der Metallfolie und der Isolationsfolien besitzen Folienleiter nur einen geringen Einreißschutz und eine noch geringere Weiterreißfestigkeit. In der Praxis treten Beschädigungen an einem Folienleiter insbesondere an der Austrittsstelle aus der laminierten Glasscheibe auf. Diese entstehen, wenn der Folienleiter einer Zugbelastung über eine Glaskante ausgesetzt wird oder der Folienleiter tordiert wird.

Abhilfe schafft ein Fixieren des Übergangs zwischen Folienleiter und Kabel möglichst nahe oder auf der Scheibe, wie das in DE 42 35 063 A1 beschrieben wird. Dort werden die in der Zwischenschicht einer Verbundglasscheibe eingebetteten Heizdrähte mit einem Folienleiter kontaktiert. Der Folienleiter wird aus dem Verbund heraus- und um den äußeren Rand einer Glasscheibe des Verbundes herumgeführt. Anschließend wird der Folienleiter auf der Außenseite der Glasscheibe aufgeklebt und mit einem Flachstecker oder Druckknopfanschluss verlötet. Die Elemente, wie Flachstecker oder Druckknopfanschlüsse, stehen aus der glatten Glasoberfläche heraus und sind anfällig für Beschädigungen.

Insbesondere im Automobilbereich werden die elektrischen Leitungsübergänge vom und zum Folienleiter in der Regel gelötet. Aufgrund der niedrigen Bordspannung von 12 V bis 14 V muss bei hohen Strömen, wie sie beispielsweise eine Heizfunktion benötigt, auf niedrige Kontaktwiderstände an elektrischen Leitungsübergängen geachtet werden.

Eine alternative Anschlussvorrichtung für elektrisch beheizbare Plattenelemente aus Glas ist aus DE 102 41 728 A1 bekannt. Hierbei dient eine Ausnehmung in einer der Glasscheiben mit einem hintergreifenden Vorsprung als Widerlager für ein Befestigungselement aus Kunststoff. Das Befestigungselement steht aus der glatten Glasscheibenoberfläche hervor und die notwendige Lochbohrung ist ein aufwendiger Verfahrensschritt. Die Öffnung in der Glasscheibe ermöglicht das Eindringen von Sauerstoff und Luftfeuchtigkeit, was zur Korrosion der empfindlichen Heizschicht führen kann. Die hervorstehenden Befestigungselemente sind sperrig und anfällig für Beschädigungen beim Transport sowie bei der Montage.

Die Aufgabe der vorliegenden Erfindung besteht darin, eine verbesserte laminierte Glasscheibe mit elektrischer Funktion und einem Anschlusselement bereitzustellen, das zur schnellen und einfachen Montage am Verwendungsort geeignet ist. Die Integrität sowie die optische Erscheinung der laminierten Glasscheibe sollen durch das Anschlusselement möglichst wenig beeinflussen werden.

Die Aufgabe der vorliegenden Erfindung wird erfindungsgemäß durch eine laminierte Glasscheibe mit elektrischer Funktion und Anschlusselement gemäß Anspruch 1 gelöst. Bevorzugte Ausführungen gehen aus den Unteransprüchen hervor.

Ein Verfahren zur Herstellung einer laminierten Glasscheibe und elektrischer Kontaktierung mittels eines Steck- oder Klebesystems, sowie eine Verwendung der laminierten Glasscheibe gehen aus weiteren Ansprüchen hervor.

Die erfindungsgemäße laminierte Glasscheibe enthält mindestens zwei Glasscheiben, die mit mindestens einer thermoplastischen Zwischenschicht miteinander verbunden sind.

Die Glasscheiben sind vorzugsweise aus vorgespannten, teilvorgespannten oder nichtvorgespannten Glas, insbesondere Floatglas, Gussglas und Keramikglas gefertigt. Sie weisen bevorzugt Dicken von 4 mm bis 10 mm auf. Die Zwischenschichten enthalten vorzugsweise thermoplastische Kunststoffe, wie Polyvinylbutral (PVB) oder Ethylenvinylacetat (EVA) oder mehrere Schichten davon, bevorzugt mit Dicken von 0,3 mm bis 0,8 mm.

Zwischen den einzelnen Glasscheiben befindet sich mindestens eine elektrisch funktionelle Schicht, vorzugsweise eine elektrisch beheizbare Beschichtung, eine elektrochrome oder photovoltaische Schicht. Elektrisch beheizbare Beschichtungen enthalten bevorzugt eine oder mehrere voneinander isolierte Schichten aus Metall, besonders bevorzugt enthalten sie Silber. Die Metallschichten sind vorzugsweise in einem dielektrischen Material vom Typ Metalloxid als Diffusionsbarriere eingebettet.

Bei einer vorteilhaften Ausgestaltung der erfindungsgemäßen laminierten Glasscheibe befindet sich mindestens eine elektrisch funktionelle Schicht auf mindestens einer der Innenseiten der Glasscheiben. Innenseite der Glasscheibe bedeutet hier jede der thermoplastischen Zwischenschicht zugewandte Seite. Im Falle eines Glasverbunds aus mehr als zwei Glasscheiben können sich auch mehrere elektrisch funktionelle Schichten auf mehreren Innenseiten der Glasscheiben befinden. Alternativ kann eine funktionelle Schicht zwischen zwei thermoplastischen Zwischenschichten eingebettet sein.

Die elektrisch funktionelle Schicht ist mit einem Folienleiter elektrisch leitend verbunden. Die Verbindung erfolgt vorzugsweise durch Klemmen, Löten oder Kleben mittels eines elektrisch leitfähigen Klebers.

Der Folienleiter ist aus der laminierten Glasscheibe herausgeführt und auf einer Außenseite der laminierten Glasscheibe befestigt. Außenseite der laminierten Glasscheibe bedeutet hier jede Seite, die sich nicht im Inneren des laminierten Glasscheibenverbundes befindet. Dies umfasst die der thermoplastischen Zwischenschicht abgewandten Seite der Glasscheibe sowie deren umlaufende Randfläche. Der Folienleiter kann auch auf beiden Außenseiten der laminierten Glasscheibe befestigt werden, wenn er beispielsweise zweilagig oder in seiner Erstreckungsrichtung geteilt ist.

Der Folienleiter weist auf der Außenseite der laminierten Glasscheibe eine Anschlussstelle zur elektrischen Kontaktierung auf. Dies ist bevorzugt eine Aussparung in der äußeren Kunststoffisolierung des Folienleiters, so dass der metallische Innenleiter des Folienleiters für Kontaktelemente frei zugänglich ist.

In einer bevorzugten Ausgestaltung der Erfindung befindet sich die Anschlussstelle des Folienleiters in einem Bereich der umlaufenden Randfläche der Glasscheibe. Auf diese Weise wird ein besonders ästhetisches Ergebnis erzielt, da die in Durchsicht betrachteten Bereiche der laminierten Glasscheibe keine äußeren Kontaktelemente aufweisen.

Die vorliegende Erfindung umfasst außerdem mindestens ein ein- oder mehrteiliges Gehäuse mit einer elektrischen Zuleitung und einem Kontaktelement zur Ausbildung einer elektrischen Leitungsverbindung mit der Anschlussstelle des Folienleiters.

Das Gehäuse wird vorzugsweise aus einem elektrisch isolierenden Werkstoff hergestellt. Für eine industrielle Fertigung des Gehäuses bieten sich thermoplastische Kunststoffe und Elastomere an, die im Spritzgussverfahren verarbeitet werden. Solche Spritzgussverfahren zur Herstellung von Kunststoffgehäusen sind aus DE 103 53 807 A1 bekannt. Als thermoplastische Kunststoffe und Elastomere werden beispielsweise Polyamid, Polyoxymethylen, Polybutylenterephthalat oder Ethylen-Propylen-DienKautschuk verwendet. Alternativ können auch Vergusswerkstoffe wie Acrylat- oder Epoxidharzsysteme zur Herstellung des Gehäuses verwendet werden. Das Gehäuse kann aus Metall oder einem anderen elektrisch leitenden Werkstoff mit elektrisch isolierenden Einsätzen hergestellt werden.

Als Kontaktelemente werden bevorzugt Kontaktstifte oder Federkontaktelemente aus Metall verwendet. Für den bevorzugten Einsatzzweck in einem Flächenheizelement mit relativ hohen Betriebsspannungen müssen nur relativ kleine Ströme übertragen werden, so dass eine lötfreie, klemmende Verbindung genügt. Außerdem ist die Kontaktstelle beim Einsatz in Gebäuden in der Regel keinen Vibrationen ausgesetzt. Bei Bedarf kann die elektrische Leitungsverbindung zwischen Kontaktelementen auch geklebt oder zusätzlich gesichert werden.

Das Gehäuse kann als Basis für einen Anschlussstecker oder eine Anschlussleitung dienen. Außerdem kann es weitere Funktionselemente wie eine Steuerungselektrik oder einen Temperatursensor aufnehmen.

In einer bevorzugten Ausgestaltung der Erfindung weist die laminierte Glasscheibe eine Betriebsspannung von 90 V bis 400 V, besonders bevorzugt von 100 V bis 250 V auf.

Das Gehäuse wird auf der Außenseite der laminierten Glasscheibe durch Kleben befestigt und abgedichtet. Das Kleben erfolgt vorzugsweise mittels eines Klebestrangs oder Klebebandes mit einem Kleber auf Acryl- oder Polyurethanbasis. Durch die Verklebung kann das Innere des Gehäuses gegen Gase, Wasser oder Feuchtigkeit hermetisch abgedichtet werden. Die elektrische Kontaktstelle wird dabei vor Korrosion geschützt.

Alternativ kann das Gehäuse auf die Glasscheibe gesteckt werden. Dazu weist das Gehäuse bevorzugt ein U-förmiges Profil auf, so dass der Seitenrand der laminierten Glasscheibe klemmend umschlossen wird. Das geklemmte Gehäuse kann zusätzlich durch Kleben abgedichtet und gesichert werden.

Bei der vorliegenden Erfindung weist mindestens eine der einzelnen Glasscheiben des laminierten Glasscheibenverbundes einen Rückschnitt auf oder ist im Vergleich zu der anderen Glasscheibe versetzt. Der Rückschnitt, also der Abstand zwischen den Seitenrändern der einzelnen Glasscheiben, beträgt bevorzugt von 0,1 mm bis 0,5 cm, besonders bevorzugt von 0,1 mm bis 0,5 mm. Der Rückschnitt kann sich über die Breite der gesamten Glasscheibe erstrecken oder nur auf einen Bereich um die Austrittsstelle des Folienleiters. Der Folienleiter verläuft im Bereich des Rückschnitts um den Seitenrand der Glasscheibe herum. Er steht nicht hervor und ist bei Transport und Montage weitgehend vor Beschädigungen geschützt.

Die Erfindung umfasst außerdem ein Verfahren zur Herstellung einer laminierten Glasscheibe mit elektrischer Funktion und elektrischer Kontaktierung mittels eines Steck- und/oder Klebesystems. In einem ersten Schritt wird ein mit der elektrisch funktionellen Schicht verbundener Folienleiter aus einer laminierten Glasscheibe herausgeführt und um den Seitenrand der Glasscheibe herumgelegt. In einem zweiten Schritt wird der Folienleiter auf der Außenseite der Glasscheibe aufgeklebt. Die Anschlussstelle des Folienleiters befindet sich dabei auf der der Glasscheibe abgewandten Seite. In einem dritten Schritt wird ein Gehäuse mit mindestens einem Federkontaktelement auf die Glasscheibe geklebt. Alternativ kann das Gehäuse auch an die laminierte Glasscheibe geklemmt werden. Das Federkontaktelement im Gehäuse tritt dabei in elektrischen Kontakt mit der Anschlussstelle des Folienleiters.

Bei einer laminierten Glasscheibe, die aus zwei Einzelscheiben besteht, kann der Folienleiter um den Seitenrand der einen oder der anderen Einzelscheibe herumgelegt werden. Der Folienleiter kann gleichzeitig um beide Seitenränder der Einzelscheiben herumgelegt und auf deren Außenseiten aufgeklebt werden, wenn er beispielsweise zweilagig oder in seiner Erstreckungsrichtung geteilt ist.

Die Position des Federkontaktelements ist im Gehäuse derart abgestimmt, dass eine einfache und passgenaue Montage mit der Anschlussstelle erfolgt. Das Gehäuse kann auch als Halter für die laminierte Glasscheibe ausgebildet sein, beispielsweise als Schiene, die sich über die gesamte Stirnfläche der Glasscheibe erstreckt.

Die Erfindung umfasst außerdem die Verwendung der laminierten Glasscheibe als funktionales und/oder dekoratives Einzelstück und als Einbauteil in Möbeln, Geräten und Gebäuden sowie in Fortbewegungsmitteln auf dem Lande, in der Luft oder zu Wasser, insbesondere in Kraftfahrzeugen beispielsweise als Windschutzscheibe, Heckscheibe, Seitenscheibe und/oder Glasdach. Die laminierte Glasscheibe wird vorzugsweise als elektrischer Heizkörper verwendet.

Die Erfindung umfasst des Weiteren die Verwendung der laminierten Glasscheibe mit einer an die elektrisch funktionelle Schicht angelegten Spannung von 90 V bis 400 V, bevorzugt von 100 V bis 250 V. Spannungen in diesem Bereich stehen als haushaltübliche Netzspannung zur Verfügung und eignen sich besonders für den Betrieb eines optisch transparenten, elektrischen Heizkörpers.

Im Folgenden wird die Erfindung anhand einer Zeichnung näher erläutert. Die Zeichnung ist eine schematische Darstellung und nicht maßstabsgetreu. Insbesondere die Schichtdicken des Folienleiters sind hier zur Veranschaulichung deutlich vergrößert dargestellt. Die Zeichnung schränkt die Erfindung in keiner Weise ein.

Es zeigen:
Figur 1 eine laminierte Glasscheibe (1) mit aufgeklebten Gehäuse (11) und elektrischer Kontaktierung mittels Federkontaktelement (13),
Figur 2 eine laminierte Glasscheibe (1) mit aufgesteckten Gehäuse (11) und elektrischer Kontaktierung mittels Federkontaktelement (13),
Figur 3 eine laminierte Glasscheibe (1) mit einem nach außen geführten Folienleiter (2) und Rückschnitt in der oberen Glasscheibe (1.1) in einer Draufsicht,
Figur 3A eine laminierte Glasscheibe (1) mit einem nach außen geführten Folienleiter (2) und teilweisem Rückschnitt in der oberen Glasscheibe (1.1) in einer Draufsicht,
Figur 4 eine Querschnittszeichnung entlang der Linie I-I aus Figur 3 durch eine laminierte Glasscheibe (1) mit einer elektrisch funktionellen Schicht (3) und einem nach außen geführten Folienleiter (2),
Figur 5 eine perspektivische Darstellung einer laminierten Glasscheibe (1) mit Verlauf des Folienleiters (2) innerhalb der laminierten Glasscheibe (1) und
Figur 6 eine Querschnittszeichnung durch eine laminierte Glasscheibe (1) mit einem nach außen geführten Folienleiter (2) ohne Rückschnitt.

In den folgenden Figuren ist eine Ausführung der erfindungsgemäßen laminierten Glasscheibe (1) mit einem Anschlusselement am Beispiel eines Flächenheizelements. dargestellt.

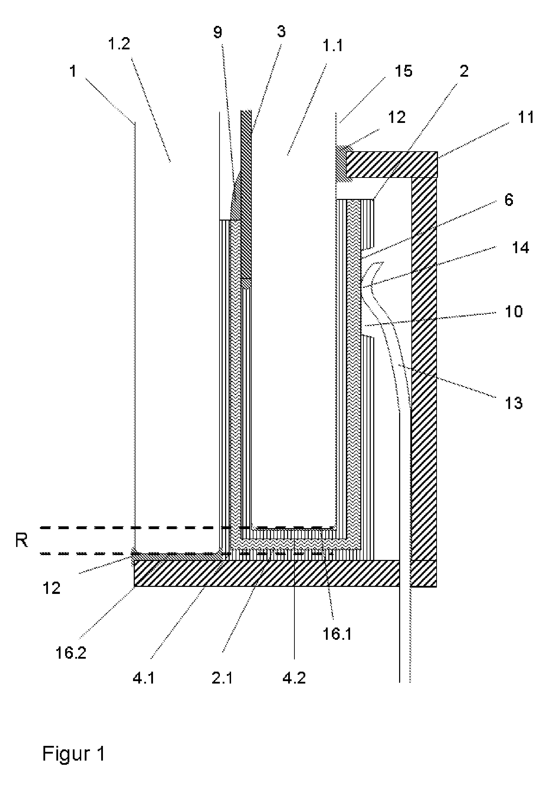

In Figur 1 ist eine laminierte Glasscheibe (1) mit aufgeklebtem Gehäuse (11) und elektrischer Kontaktierung durch ein Federkontaktelement (13) dargestellt.

Die Einzelglasscheiben (1.1) und/oder (1.2) der laminierten Glasscheibe (1) bestehen aus teilvorgespannten Glas mit einer Vorspannung von mindestens 70 MPa gemäß DIN EN 1863. Die Einzelglasscheiben (1.1) und/oder (1.2) weisen eine Dicke von 4 mm bis 10 mm auf und sind mit einer thermoplastischen Zwischenschicht miteinander verbunden. Die thermoplastische Zwischenschicht besteht aus einer Polyvinylbutyral-Folie (8) mit einer Dicke von 0,76 mm. Im dargestellten Beispiel ist als elektrisch funktionelle Schicht (3) eine elektrisch beheizbare Beschichtung auf die der thermoplastischen Zwischenschicht (8) zugewandten Seite der oberen Glasscheibe (1.1) aufgebracht. Die elektrisch beheizbare Beschichtung kann gleichwohl auf die der thermoplastischen Zwischenschicht zugewandten Seite der zweiten Glasscheibe (1.2), auf beiden Glasinnenseiten aufgebracht werden. Die elektrisch beheizbare Beschichtung (3) ist aus DE 102 08 552 A1 bekannt und besteht aus einer Silberschicht, die zwischen zwei Metalloxidschichten eingebettet ist.

Die laminierte Glasscheibe (1) weist beispielsweise Flächen von 0,4 m x 0,6 m bis 1 m x 1,8 m auf. Zur Erfüllung der Heizfunktion wird eine Netzspannung von 220 V bis 240 V bei 50 Hz bis 60 Hz an die elektrisch beheizbare Beschichtung (3) angelegt. Die Heizleistung beträgt von 800 W/m² bis 1000 W/m². Die Betriebstemperatur beträgt maximal von 60 °C bis 70 °C.

Die elektrisch beheizbare Beschichtung (3) ist mit der elektrisch leitfähigen Schicht (2.1) eines Folienleiters (2) elektrisch leitend verbunden (9). Die Verbindung (9) erfolgt beispielsweise durch Löten oder Kleben mit einem elektrisch leitfähigen Kleber. Der Folienleiter (2) besteht aus einem verzinnten Kupferband (2.1) mit einer Dicke von 0,03 mm bis 0,1 mm und einer Breite von beispielsweise von 8 mm bis 16 mm. Das Kupferband (2.1) ist beidseitig mit einer Kunststoff-Folie (4.1) (4.2) aus Polyimid Klebeschichten (5.1) (5.2) beklebt. Der Folienleiter (2) ist zusätzlich mit der Oberfläche (15) der Glasscheibe (1.1) mit einer Klebeschicht (5.3) verklebt.

Der Folienleiter (2) weist eine Anschlussstelle (6) zur elektrischen Kontaktierung auf. An der Anschlussstelle (6) befindet sich eine Aussparung (10) mit einer Größe von beispielsweise 0,5 cm x 0,5 cm in der außen liegenden Kunststofffolie (4.1). Im Bereich der Aussparung (10) ist das verzinnte Kupferband (2.1) des Folienleiters (2) frei zugänglich.

Anschlussstelle (6) dargestellt in der Figur 1 befindet sich auf der Außenseite der Glasscheibe (1.1) in einem Abstand von etwa 2 cm vom Seitenrand der Glasscheibe (1.1). Die Anschlussstelle (6) kann sich aber auch auf jeder beliebigen Stelle der Außenseite (15) der Glasscheibe (1.1) sowie auf deren Seitenrand (16.1) selbst befinden.

In Figur 1 ist die Glasscheibe (1.1) im Vergleich zur zweiten Glasscheibe (1.2) um einen Abstand R von beispielsweise 3 mm rückgeschnitten oder zurückversetzt. Der Folienleiter (2) verläuft in dem so entstandenen Raum. Der Folienleiter (2) ragt an seiner Austrittstrittsstelle aus dem Glasverbund nicht über die zweite Glasscheibe (1.2) hinaus und ist vor äußeren mechanischen Belastungen geschützt.

Im angegebenen Beispiel erfolgt die elektrische Leitungsverbindung (14) zur Anschlussstelle (6) des Folienleiters (2) über ein Federkontaktelement (13). Das Federkontaktelement (13) ist mit der Spannungsversorgung oder einer äußeren Steuerungselektrik, beispielsweise einem Thermostaten, verbunden. Das Federkontaktelement (13) ermöglicht eine einfache und schnelle Kontaktierung ohne zusätzliche Schritte wie Löten oder Kleben.

Das Gehäuse (11) ist mit seinem Federkontaktelement (13) derart gestaltet, dass es einfach und schnell montiert werden kann. In Figur 1 ist beispielhaft ein Gehäuse (11) zum Verkleben mit dem Glasscheibenverbund dargestellt. Als Montageanschlag dient der Seitenrand (16.2) der hervorstehenden Glasscheibe (1.2) und die Oberfläche (15) der Glasscheibe (1.1). Die Position des Federkontaktelements (13) ist so abgestimmt, dass ein elektrischer Kontakt (14) mit der Anschlussstelle (6) des Folienleiters (2) erfolgt.

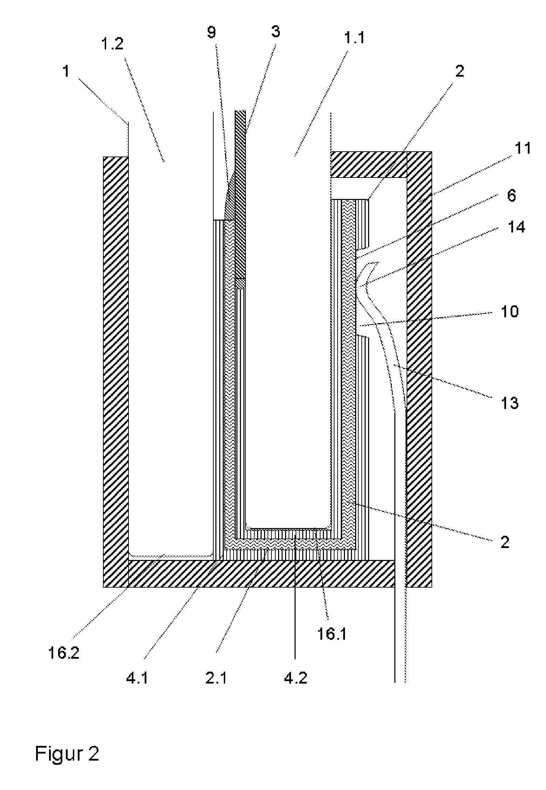

In Figur 2 ist ein Gehäuse (11) dargestellt, welches auf den Glasscheibenverbund aufgesteckt ist. Auch hier ist die Position des Federkontaktelements (13) so abgestimmt, dass ein elektrischer Kontakt (14) mit der Anschlussstelle (6) des Folienleiters (2) erfolgt.

Die laminierte Glasscheibe (1) wird vorzugsweise mit nach außen geführten und fest mit der Glasoberfläche (15) verklebten Folienleitern (2) produziert. Erst am Montageort wird das Gehäuse (11) auf die laminierte Glasscheibe geklebt oder gesteckt.

Bei beiden Gehäusevarianten besteht die Möglichkeit zunächst die laminierte Glasscheibe (1) zu montieren und dann das Gehäuse (11) zu befestigen. Alternativ kann das Gehäuse (11) zuerst montiert werden, beispielsweise als Fußboden- oder Wandleiste. Anschließend wird die laminierte Glasscheibe (1) in das Gehäuse (11) eingebracht.

Bei Verwendung der steckbaren Gehäusevariante aus Figur 2 zusammen mit einem geeigneten Schienensystem kann das beheizbare Glaselement auch verschiebbar oder flexibel entnehmbar eingebaut werden.

Das Verkleben des Gehäuses (11) mit den Glasscheiben (1.1) und (1.2) kann beispielsweise mit einem Acrylatkleber oder einem Polyurethankleber (12) erfolgen. Neben der einfachen und dauerhaften Verbindung zwischen Gehäuse (11) und Glasscheiben (1.1) und (1.2) erfüllen diese Kleber eine Dichtfunktion und schützen die elektrische Leitungsverbindung (14) zwischen Folienleiter (2) und Kontaktelement (13) vor Feuchtigkeit und Korrosion. Durch die Abdichtung der spannungsführenden elektrischen Leiter kann außerdem die erforderliche elektrische Schutzklasse des elektrischen Anschlusses erzielt werden. Diese ist beispielsweise für den Einsatz in Feuchträumen oder Badezimmern notwendig.

Die elektrisch leitfähige Schicht (2.1) des Folienleiters (2) muss an der Anschlussstelle (6) nicht metallisch blank sein, sondern kann mit einer Schutzschicht aus einem Lack oder einer Kunststofffolie überzogen sein. Diese Schutzschicht schützt die metallische Kontaktfläche vor Oxidation und Korrosion während der Produktion und dem Transport zum Verwendungsort. Die Schutzschicht kann mit einem Gegenstand zur Kontaktierung, beispielsweise mit einem Kontaktstift oder einer Kontaktnadel durchdrungen werden. Alternativ kann die Schutzschicht aus einer aufgeklebten und abziehbaren Kunststofffolie bestehen. Die Kunststofffolie kann bereits während der Produktion aufgebracht werden. Sie kann dann bei der Montage vor dem eigentlichen elektrischen Kontaktieren entfernt werden.

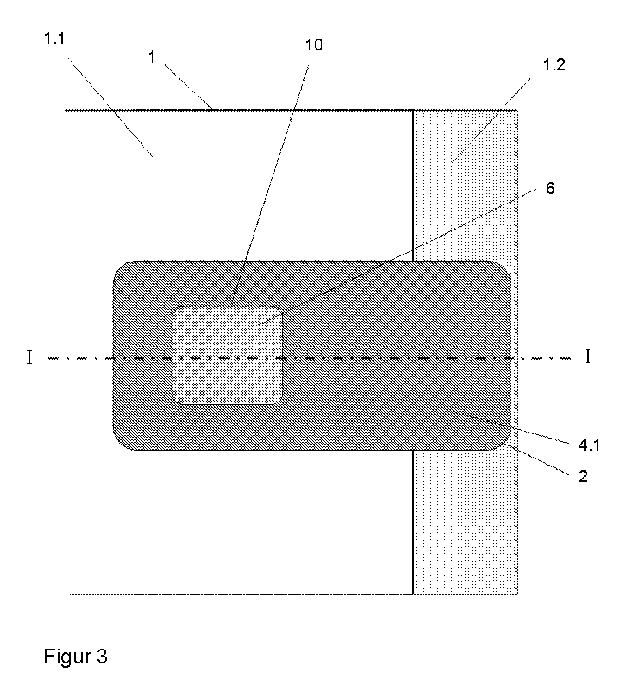

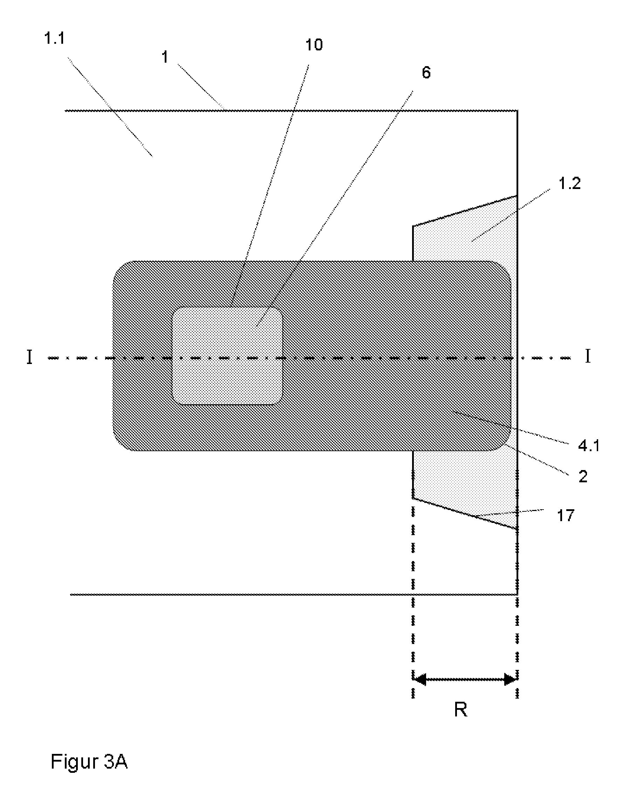

In Figur 3 ist eine Draufsicht auf eine laminierte Glasscheibe (1) mit einem nach außen geführten Folienleiter (2) ohne Gehäuse dargestellt. Die obere Glasscheibe (1.1) weist einen Rückschnitt auf, der sich über die gesamte Kante (16.1) der Glasscheibe erstreckt. Figur 3A zeigt eine alternative Ausführungsform, wobei sich der Rückschnitt (17) auf einem trapezförmigen Bereich um die Austrittsstelle des Folienleiters (2) aus dem Glasscheibenverbund erstreckt.

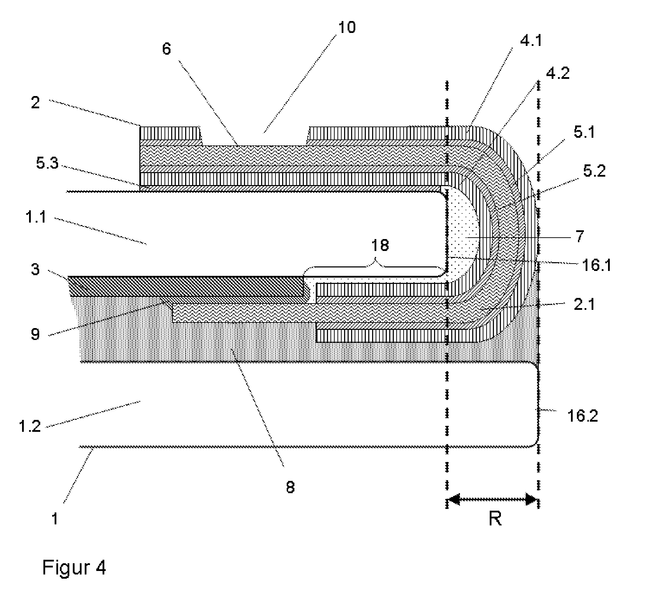

Figur 4 zeigt eine detaillierte Darstellung des Schichtaufbaus und des Folienleiters entlang der Linie I-I aus Figur 3. Da die elektrisch leitfähige Beschichtung (3) anfällig für Oxidation und Korrosion ist, wird sie in der Regel nicht bis zum äußeren Seitenrand (16.1) der Glasscheibe (1.1) geführt. Der beschichtungsfreie Bereich (18) weist vorzugsweise eine Breite von 0,5 cm bis 2 cm bezüglich des äußeren Seitenrandes (16.1) der Glasscheibe (1.1) auf.

Im Herstellungsprozess wird die elektrisch leitfähige Beschichtung (3) in der Regel auf die gesamte Glasscheibe (1.1) abgeschieden. Die Entschichtung des Bereichs (18) erfolgt dann in einem zweiten Verfahrensschritt, beispielsweise mittels Laserablation, Plasmaätzen oder mechanischen Verfahren. Alternativ können Maskierungstechniken verwendet werden.

Der entstandene Freiraum wird üblicherweise mit einem Kunststoffmaterial, beispielsweise einem Acrylatkleber als Dampfdiffusionssperre (7) gefüllt. Die hermetische Abdichtung des Randspalts schützt die korrosionsempfindliche elektrisch leitfähige Beschichtung (3) vor Luftsauerstoff und Feuchtigkeit.

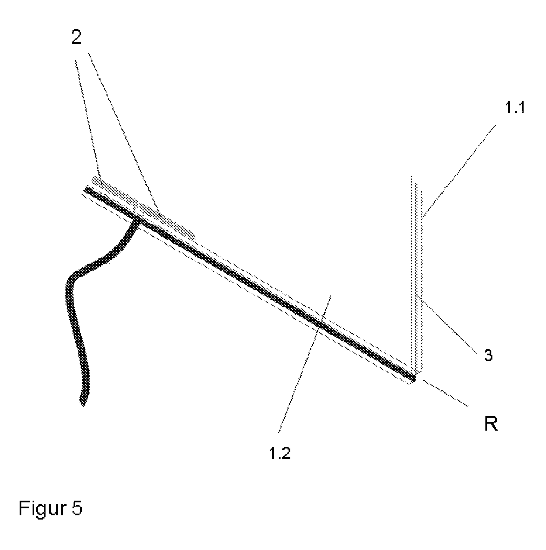

Figur 5 zeigt eine perspektivische Darstellung des Verlaufs des Folienleiters (2) innerhalb des Glasverbunds. In diesem Ausführungsbeispiel verläuft der Folienleiter (2) winkelförmig zwischen den beiden Glasscheiben (1.1) und (1.2) und ist mit der elektrisch beheizbaren Beschichtung (3), beispielsweise durch Löten verbunden. Eine solche Formgebung des Folienleiters (2) sorgt für eine große Kontaktfläche zwischen Beschichtung (3) und Folienleiter (2) sowie für eine optimierte Potential- und Wärmeverteilung innerhalb der Beschichtung (3).

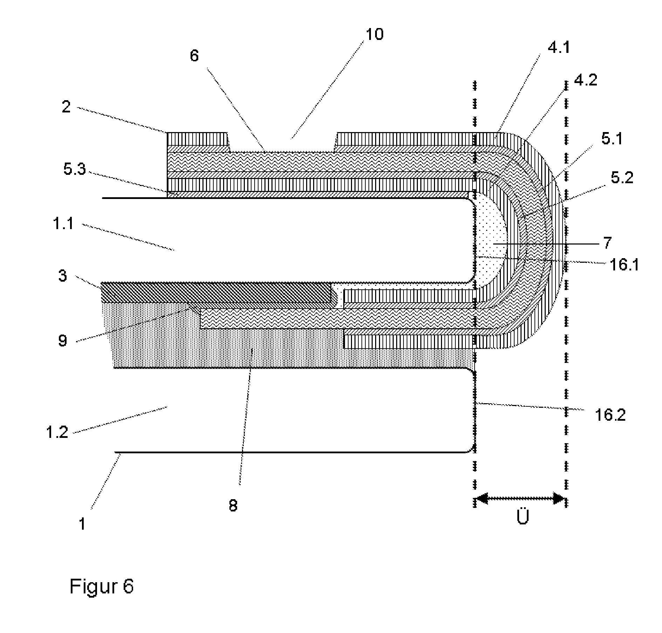

In Figur 6 ist eine Querschnittszeichnung durch eine laminierte Glasscheibe (1) mit einer elektrisch funktionellen Schicht (3) und einem nach außen geführten Folienleiter (2) dargestellt. Die Glasscheiben (1.1) und (1.2) sind hier ohne Rückschnitt oder Versatz ausgeführt. Der Folienleiter (2) steht um eine Länge Ü über die Ränder (16.1) und (16.2) der Glasscheiben (1.1) und (1.2) hinaus. Im überstehenden Bereich Ü ist der Folienleiter (2) besonders anfällig für mechanische Beschädigungen während des Transports und der Montage.

Es zeigen:
- (1): laminierte Glasscheibe
- (1.1), (1.2): Glasscheibe
- (2): Folienleiter
- (2.1): elektrisch leitfähige Schicht von (2)
- (3): elektrisch funktionelles Schicht, Heizbeschichtung
- (4.1), (4.2): elektrisch isolierende Folie
- (5.1), (5.2), (5.3): Klebeschicht
- (6): Anschlussstelle
- (7): Dampfdiffusionssperre
- (8): thermoplastische Zwischenschicht
- (9): elektrische Leitungsverbindung zwischen (2.1) und (3)
- (10): Aussparung in (4.1)
- (11): Gehäuse
- (12): Kleber, Dichtung
- (13): Federkontaktelement, Zuleitung
- (14): elektrische Leitungsverbindung zwischen (2.1) und (13)
- (15): Außenseite von (1.1)
- (16.1): Seitenrand von (1.1)
- (16.2): Seitenrand von (1.2)
- (17): Rückschnitt, Versatz
- (18): beschichtungsfreier Bereich
- I-I: Schnittlinie
- R: Rückschnitt
- Ü: Überstand

## Patentansprüche

1. Laminierte Glasscheibe mit elektrischer Funktion und Anschlusselement, umfassend:
a. mindestens zwei Glasscheiben (1.1) (1.2), die mit mindestens einer thermoplastischen Zwischenschicht (8) flächenmäßig verbunden sind,
b. mindestens eine elektrisch funktionelle Schicht (3), die sich zwischen den Glasscheiben (1.1) (1.2) befindet,
c. mindestens einen Folienleiter (2), der mit der elektrisch funktionellen Schicht (3) elektrisch leitend verbunden ist,
der Folienleiter (2) aus der laminierten Glasscheibe (1) herausgeführt ist, der Folienleiter (2) auf mindestens einer Außenseite (15) der laminierten Glasscheibe (1) befestigt ist und
der Folienleiter (2) auf der Außenseite der laminierten Glasscheibe (1) eine Anschlussstelle (6) zur elektrischen Kontaktierung aufweist,
d. mindestens ein Gehäuse (11) mit mindestens einer elektrischen Zuleitung (13) und mindestens einer elektrischen Leitungsverbindung (14), wobei das Gehäuse (11) auf der Außenseite mindestens einer der Glasscheiben (1.1) (1.2) geklebt oder geklemmt ist,
die elektrische Leitungsverbindung (14) des Gehäuses (11) die Anschlussstelle (6) des Folienleiters (2) elektrisch kontaktiert und
e. mindestens eine Glasscheibe (1.1) einen Rückschnitt aufweist und der Folienleiter (2) ohne Überstand um den Seitenrand (16.1) der rückgeschnittenen Glasscheibe (1.1) verläuft,
wobei die elektrische Leitungsverbindung (14) zwischen dem Folienleiter (2) und der Zuleitung (13) geklebt oder geklemmt ist.

2. Laminierte Glasscheibe nach Anspruch 1, wobei die Glasscheiben (1.1) (1.2) teilvorgespanntes Glas mit einer Dicke von 4 mm bis 10 mm enthalten, die thermoplastische Zwischenschicht Polyvinylbutral (8) mit einer Dicke von 0,7 mm bis 0,9 mm enthält und die elektrisch funktionelle Schicht (3) mindestens eine Metallschicht, bevorzugt eine Silberschicht, und mindestens eine Metalloxidschicht enthält.

3. Laminierte Glasscheibe nach Anspruch 1 oder 2, wobei die elektrisch funktionelle Schicht (3) sich auf mindestens einer der Innenseiten der Glasscheiben (1.1) (1.2) befindet.

4. Laminierte Glasscheibe nach einem der Ansprüche 1 bis 3, wobei die Glasscheibe (1.1) (1.2) einen Rückschnitt von 0,1 mm bis 0,5 cm, bevorzugt von 0,1 mm bis 0,5 mm aufweist.

5. Laminierte Glasscheibe nach einem der Ansprüche 1 bis 4, wobei die elektrisch funktionelle Schicht (3) eine Heizschicht ist.

6. Laminierte Glasscheibe nach einem der Ansprüche 1 bis 5, wobei das Innere des Gehäuses (11) durch Dichtmittel (12), bevorzugt einem Kleber auf Acryl- oder Polyurethanbasis, gegen Gase, Wasser oder Feuchtigkeit abgedichtet ist.

7. Laminierte Glasscheibe nach einem der Ansprüche 1 bis 6, wobei die elektrische Leitungsverbindung (9) zwischen der elektrisch funktionellen Schicht (3) und dem Folienleiter (2) lötfrei erfolgt und vorzugsweise geklebt oder geklemmt ist.

8. Laminierte Glasscheibe nach einem der Ansprüche 1 bis 7, wobei sich die Anschlussstelle (6) des Folienleiters (2) auf der der Glasscheibe (1.1) (1.2) abgewandten Seite befindet.

9. Verfahren zur Herstellung einer laminierten Glasscheibe mit elektrischer Funktion und Anschlusselement nach einem der Ansprüche 1 bis 8, wobei:
a. mindestens ein mit der elektrisch funktionellen Schicht (3) verbundener Folienleiter (2) in eine laminierte Glasscheibe (1) eingebracht wird und herausragt,
b. der Folienleiter (2) um den Seitenrand (16.1) der Glasscheibe (1.1) herumgelegt wird,
c. der Folienleiter (2) auf der Außenseite der Glasscheibe (1.1) aufgeklebt wird und
d. ein Gehäuse (11) mit mindestens einem Federkontaktelement (13) auf die Glasscheibe (1.1) geklebt und/oder geklemmt wird und zwischen dem Federkontaktelement (13) und der Anschlussstelle (6) des Folienleiters (2) elektrischer Kontakt entsteht.

10. Verwendung der laminierten Glasscheibe (1) nach einem der Ansprüche 1 bis 8 mit einer an die elektrisch funktionelle Schicht (3) angelegten Spannung von 90 V bis 400 V, bevorzugt von 100 V bis 250 V.

11. Verwendung der laminierten Glasscheibe (1) nach einem der Ansprüche 1 bis 8 als funktionales und/oder dekoratives Einzelstück und als Einbauteil in Möbeln, Geräten und Gebäuden sowie in Fortbewegungsmitteln auf dem Lande, in der Luft oder zu Wasser, insbesondere in Kraftfahrzeugen beispielsweise als Windschutzscheibe, Heckscheibe, Seitenscheibe und/oder Glasdach.

12. Verwendung der laminierten Glasscheibe (1) nach einem der Ansprüche 1 bis 8 als elektrischer Heizkörper.

## Claims

1. Laminated glass pane with electrical function and connection element, comprising:
a. at least two glass panes (1.1) (1.2), which are areally connected by at least one thermoplastic intermediate layer (8),
b. at least one electrically functional layer (3), which is situated between the glass panes (1.1) (1.2),
c. at least one foil conductor (2), which is electrically conductively connected to the electrically functional layer (3),
the foil conductor (2) is led out from the laminated glass pane (1),
the foil conductor (2) is fixed on at least one outer side (15) of the laminated glass pane (1), and
the foil conductor (2) has, on the outer side of the laminated glass pane (1), a connection location (6) for making electrical contact,
d. at least one housing (11) with at least one electrical feed line (13) and at least one electrical line connection (14), wherein the housing (11) is adhesively bonded or clamped on the outer side of at least one of the glass panes (1.1) (1.2),
the electrical line connection (14) of the housing (11) makes electrical contact with the connection location (6) of the foil conductor (2), and
e. at least one glass pane (1.1) has an undercut and the foil conductor (2) runs without an overhang around the lateral edge (16.1) of the undercut glass pane (1.1)
wherein the electrical line connection (14) is adhesively bonded or clamped between the foil conductor (2) and the feed line (13).

2. Laminated glass pane according to claim 1, wherein the glass panes (1.1) (1.2) contain partially tempered glass with a thickness of 4 mm to 10 mm, the thermoplastic intermediate layer contains polyvinyl butral (8) with a thickness of 0.7 mm to 0.9 mm, and the electrically functional layer (3) contains at least one metal layer, preferably a silver layer, and at least one metal oxide layer.

3. Laminated glass pane according to claim 1 or 2, wherein the electrically functional layer (3) is situated on at least one of the inner sides of the glass panes (1.1) (1.2).

4. Laminated glass pane according to one of claims 1 through 3, wherein the glass pane (1.1) (1.2) has an undercut of 0.1 mm to 0.5 cm, preferably of 0.1 mm to 0.5 mm.

5. Laminated glass pane according to one of claims 1 through 4, wherein the electrically functional layer (3) is a heating layer.

6. Laminated glass pane according to one of claims 1 through 5, wherein the interior of the housing (11) is sealed against gases, water, or moisture by sealing means (12), preferably an acryl- or polyurethane-based adhesive.

7. Laminated glass pane according to one of claims 1 through 6, wherein the electrical line connection (9) between the electrically functional layer (3) and the foil conductor (2) is solder free and is preferably adhesively bonded or clamped.

8. Laminated glass pane according to one of claims 1 through 7, wherein the connection location (6) of the foil conductor (2) is situated on the side facing away from the glass pane (1.1) (1.2).

9. Method for producing a laminated glass pane with electrical function and connection element according to one of claims 1 through 8, wherein:
a. at least one foil conductor (2) connected to the electrically functional layer (3) is introduced into a laminated glass pane (1) and protrudes therefrom,
b. the foil conductor (2) is laid around the lateral edge (16.1) of the glass pane (1.1),
c. the foil conductor (2) is adhesively bonded on the outer side of the glass pane (1.1), and
d. a housing (11) with at least one spring contact element (13) is adhesively bonded and/or clamped onto the glass pane (1.1) and electrical contact is made between the spring contact element (13) and the connection location (6) of the foil conductor (2).

10. U ninated glass pane (1) according to one of claims 1 through 8 with a voltage of 90 V to 400 V, preferably of 100 V to 250 V applied to the electrically functional layer (3).

11. Use of the laminated glass pane (1) according to one of claims 1 through 8 as a functional and/or decorative individual piece and as a built-in part in furniture, devices, and buildings, as well as in means of transportation on land, in the air, or on water, in particular in motor vehicles, for example, as a windshield, rear window, side window, and/or glass roof.

12. Use of the laminated glass pane (1) according to one of claims 1 through 8 as an electrical heating element.

## Revendications

1. Plaque de verre feuilleté à fonction électrique et élément de connexion, comportant :
a. au moins deux plaques de verre (1.1)(1.2), qui sont liées par leurs surfaces à au moins une couche intermédiaire thermoplastique (8) ;
b. au moins une couche à fonction électrique (3), qui se trouve entre les deux plaques de verre (1.1)(1.2) ;
c. au moins un conducteur en feuille (2), qui est connecté de façon conductrice de l'électricité à la couche à fonction électrique (3),
le conducteur en feuille (2) sortant de la plaque de verre feuilleté (1),
le conducteur en feuille (2) étant fixé sur au moins un côté extérieur (15) de la plaque de verre feuilleté (1) et
le conducteur en feuille (2) présentant sur le côté extérieur de la plaque de verre feuilleté (1), un emplacement de connexion (6) pour faire le contact électrique,
d. au moins un boîtier (11) ayant au moins un fil d'alimentation électrique (13) et au moins une connexion de fil électrique (14), le boîtier (11) étant collé ou serré sur le côté extérieur d'au moins l'une des plaques de verre (1.1)(1.2),
la connexion de fil électrique (14) du boîtier (11) formant un contact électrique avec l'emplacement de connexion (6) du conducteur en feuille (2) ; et
e. au moins une plaque de verre (1.1) présentant une contre-dépouille et le conducteur en feuille (2) s'étendant sans saillie autour du bord latéral (16.1) de la plaque de verre (1.1) à contre-dépouille,
la connexion de fil électrique (14) étant collée ou serrée entre le conducteur en feuille (2) et le fil d'alimentation électrique (13).

2. Plaque de verre feuilleté selon la revendication 1, dans laquelle les plaques de verre (1.1)(1.2) contiennent un verre partiellement précontraint ayant une épaisseur de 4 mm à 10 mm, la couche intermédiaire thermoplastique contient du butyral polyvinylique (8) ayant une épaisseur de 0,7 mm à 0,9 mm et la couche à fonction électrique (3) contient au moins une couche métallique, de préférence une couche d'argent, et au moins une couche d'oxyde métallique.

3. Plaque de verre feuilleté selon l'une des revendications 1 à 2, dans laquelle la couche à fonction électrique (3) se trouve sur au moins l'un des côtés intérieurs des plaques de verre (1.1)(1.2).

4. Plaque de verre feuilleté selon l'une des revendications 1 à 3, dans laquelle la plaque de verre individuelle (1.1)(1.2) présente une contre-dépouille de 0,1 mm à 0,5 mm, de préférence de 0,1 à 0,5 mm.

5. Plaque de verre feuilleté selon l'une des revendications 1 à 4, dans laquelle la couche à fonction électrique (3) est une couche chauffante.

6. Plaque de verre feuilleté selon l'une des revendications 1 à 5, dans laquelle l'intérieur du boîtier (11) est étanche vis-à-vis des gaz, de l'eau ou de l'humidité par un moyen d'étanchéité (12), de préférence un adhésif à base acrylique ou de polyuréthane.

7. Plaque de verre feuilleté selon l'une des revendications 1 à 6, dans laquelle la connexion de fil électrique (9) s'effectue sans soudure entre la couche à fonction électrique (3) et le conducteur en feuille (2) et de préférence est collée ou serrée.

8. Plaque de verre feuilleté selon l'une des revendications 1 à 7, dans laquelle l'emplacement de connexion (6) du conducteur en feuille (2) se trouve sur le côté tourné à l'opposé de la plaque de verre (1.1)(1.2).

9. Procédé de fabrication d'une plaque de verre feuilleté à fonction électrique et élément de connexion électrique selon l'une des revendications 1 à 8, dans lequel :
a. au moins un conducteur en feuille (2) connecté à la couche à fonction électrique (3) est introduit dans une plaque de verre feuilleté (1) et fait saillie hors de celle-ci ;
b. le conducteur en feuille (2) est mis autour du bord latéral (16.1) de la plaque de verre (1.1) ;
c. le conducteur en feuille (2) est collé sur le côté extérieur de la plaque de verre (1.1); et
d. un boîtier (11) ayant au moins un élément de contact à ressort (13) est collé et/ou serré sur la plaque de verre (1.1) et un contact électrique se crée entre l'élément de contact à ressort (13) et l'emplacement de connexion (6) du conducteur en feuille (2).

10. Utilisation de la plaque de verre feuilleté (1) selon l'une des revendications 1 à 8 avec une tension appliquée à la couche à fonction électrique (3) de 90 V à 400 V, de préférence de 100 V à 250 V.

11. Utilisation de la plaque de verre feuilleté (1) selon l'une des revendications 1 à 8 en tant que pièce unique fonctionnelle et/ou décorative et en tant qu'élément de montage dans des meubles, des équipements et des constructions ainsi que dans des moyens de transport par terre, par air ou par eau, en particulier, dans des véhicules automobiles par exemple en tant que pare-brise, lunette arrière, glace latérale et/ou toit en verre.

12. Utilisation de la plaque de verre feuilleté (1) selon l'une des revendications 1 à 8 en tant que corps chauffant électrique.
